# DEMANDE DE BREVET EUROPEEN

(11) **EP 0 902 598 A1**
(43) Date de publication de la demande: **17.03.1999**
(21) Numéro de dépôt: 98202923.3
(22) Date de dépôt: 02.09.1998
(51) Int. Cl.: H04Q 7/38

(54) **Appareil téléphonique comportant une station de base et au moins un dispositif de combiné, procédé de souscription d'un dispositif de combiné, dispositif de combiné et station de base convenant à un tel appareil**

(30) Priorité: 10.09.1997 FR 9711239
(71) Demandeur: Koninklijke Philips Electronics N.V., 5621 BA Eindhoven (NL)
(72) Inventeur: Lorieau, Christophe, 75008 Paris (FR)
(74) Mandataire: Chaffraix, Jean

(57) **Abrégé**

Cet appareil comporte une station de base (1) et au moins un dispositif de combiné (HS1, HS2,..). Cet appareil comporte des moyens de crytage pour les données échangées lors de la souscription d'un dispositif de combiné auprès de la station de base. Le cryptage dépendant du combiné, on est assuré qu'un autre dispositif de combiné ne pourra se souscrire auprès de cette station de base.
Application : téléphone répondant à la norme DECT.

## Description

L'invention concerne un appareil téléphonique comportant un dispositif de base muni d'un raccord pour une ligne téléphonique et d'un ensemble d'émission-réception pour communiquer avec au moins un dispositif de combiné, à partir duquel l'utilisateur peut engager une communication téléphonique, système comportant des moyens de souscription pour valider un dispositif de combiné avec la station de base au moyen de données de souscription.

L'invention concerne un dispositif de combiné et une station de base convenant à un tel appareil.

L'invention concerne aussi un procédé de souscription d'un dispositif de combiné.

L'invention trouve des applications importantes dans les appareils téléphoniques satisfaisant à la norme DECT. Elle présente aussi un intérêt pour les normes qui impliquent des étapes rappelant celles de ladite norme et qui utilisent des données de souscription.

Le problème qui se pose avec ce genre de système est que lors de la souscription d'un dispositif de combiné avec une station de base, celle-ci diffuse des informations de souscription de sorte qu'il est possible de les récupérer. Ces informations peuvent alors être copiées sur un autre dispositif de combiné, non autorisé. Ceci constitue donc une cause de fraude importante.

La présente invention propose un appareil du genre décrit dans le préambule qui procure une bonne invulnérabilité aux souscriptions frauduleuses de dispositifs de combiné.

Pour cela, un tel appareil est remarquable en ce qu'il comporte des moyens de cryptage pour crypter lesdites données de souscription.

La description suivante faite en regard des dessins ci-annexés, le tout donné à titre d'exemple non limitatif, fera bien comprendre comment l'invention peut être réalisée.
La figure 1 montre un appareil téléphonique conforme à l'invention.
La figure 2 est un ordinogramme montrant comment les données sont cryptées,
La figure 3 est un ordinogramme montrant comment les données sont restituées.

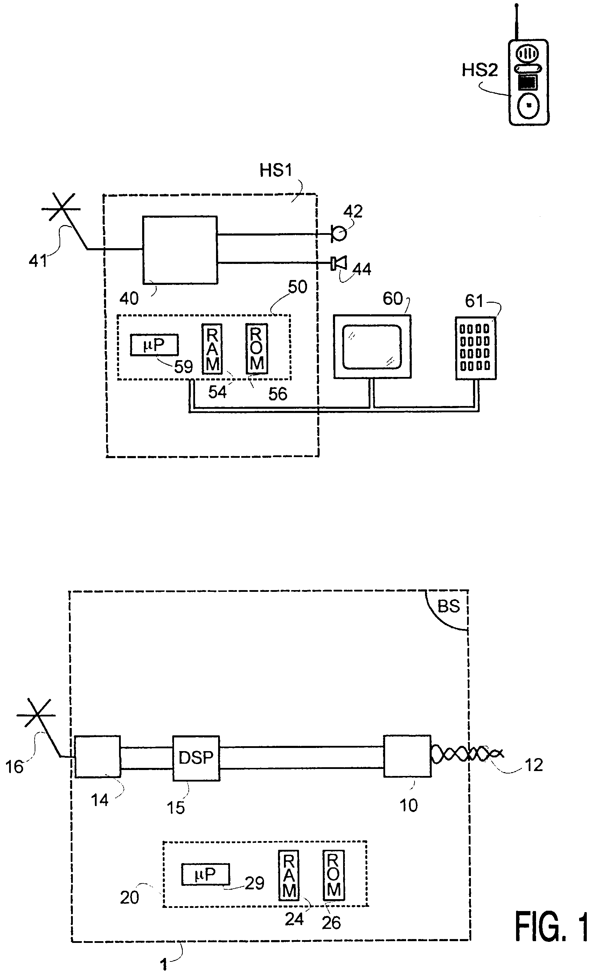

A la figure 1, l'appareil qui est représenté est un appareil répondant aux normes DECT. La référence 1 montre la station de base BS à laquelle peut être rattachée, par voie radioélectrique, une pluralité de dispositifs de combinés HS1, HS2, ... Cette station de base 1 comporte, entre autres, un circuit de ligne 10 qui lui permet d'être raccordée au réseau commuté via une ligne téléphonique 12 et un circuit radioélectrique 14 qui autorise le dialogue avec les différents combinés HS1, HS2,..., en émettant et en recevant des ondes par l'intermédiaire d'une antenne 16. Pour traiter toutes les informations de nature analogique qui transitent à l'intérieur du circuit de base, il est prévu un organe de traitement de signal 15 formé autour d'un processeur de signal DSP qui traite notamment les signaux vocaux pour les transformer en signaux numériques.

Tous les éléments de ce circuit de base 1 sont gérés par un ensemble à microprocesseur 20. Cet organe est composé, notamment, de la façon usuelle, d'une mémoire vive 24, d'une mémoire morte 26 contenant les instructions de fonctionnement de l'appareil et d'un processeur de gestion 29.

Le dispositif de combiné HS1, seul montré en détail (le dispositif HS2 pouvant être de structure identique) comporte un ensemble de communication 40 muni d'une antenne 41 qui lui permet de communiquer avec la station de base BS et de là, avec les autres dispositifs de combinés HS2,.... Cet ensemble traite les informations en provenance du microphone 42 et fournit aussi les signaux pour un haut-parleur 44. Il est prévu aussi un organe de gestion 50 composé, tout comme l'organe de gestion 20, d'une mémoire vive 54, d'une mémoire morte 56 contenant les instructions de fonctionnement de l'appareil et d'un processeur de gestion 59. La mémoire 56 peut être du type EEPROM ou du type flash. Le dispositif HS1 comporte aussi un écran 60 sur lequel différentes informations sont affichées et un clavier 61. Ces combinés sont des mobiles et de ce fait sont alimentés par un accumulateur, non représenté sur la figure 1.

Lorsqu'un dispositif de combiné a été souscrit à une station de base, il détient trois informations qui sont stockées dans la mémoire 56 :
- l'information RFPI (cf. normes ETSI ETS 175-6) qui est l'identifiant de la base à laquelle le dispositif est souscrit (fournie par la base lors de la souscription),
- l'information UAK (cf. normes ETSI ETS 175-5) qui est une clé d'authentification (également fournie par la base lors de la souscription),
- l'information IPUI (cf. normes ETSI ETS 175-6) qui est son propre identifiant et qu'il a fourni à la station de base lors de la souscription.
Ceci est résumé par le tableau suivant :

| données utiles | données stockées |
|---|---|
| IPUI | IPUI |
| UAK | UAK |
| RFPI | RFPI |

Si ces données sont copiées d'un premier dispositif de combiné à un deuxième, alors ce deuxième dispositif de combiné est devenu un "clone" du premier dispositif. Le deuxième dispositif a donc hérité de toutes les possibilités du premier mobile.

Pour éviter cela conformément à l'invention, lesdites informations sont stockées sous forme cryptée dans la mémoire 56.

| données utiles | données stockées |
|---|---|
| IPUI | f(IPUI,x) |
| UAK | f(UAK,x) |
| RFPI | f(RFPI,x) |

où f() est une fonction inversible et x est un code spécifique à chaque dispositif de combiné qui est programmé lors de la fabrication.

Selon un mode de réalisation préféré, cette fonction f est définie de la manière suivante :
- f(id, x) avec id: = IPUI (100 éléments binaires)
ou UAK (128 éléments binaires)
ou RFPI (40 éléments binaires)
et x est un octet programmé en OTP (en cours de fabrication). La fonction f est alors :
- pour id = IPUI ou UAK
   f() = échange dans chaque octet des quartets haut et bas puis x modulo 32 décalages d'éléments binaires,
- et pour id = RFPI
   f'() = échange dans chaque octet des quartets haut et bas,

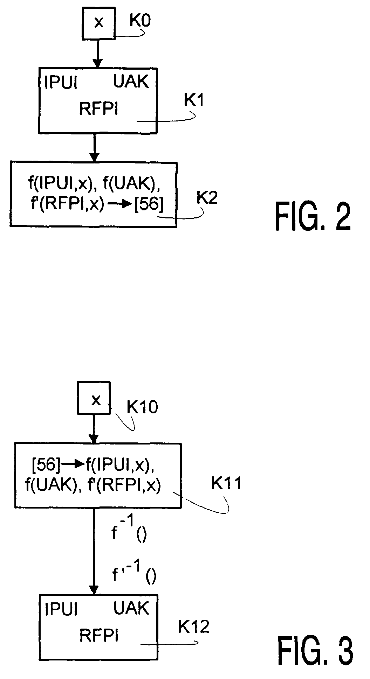

Les figures 2 et 3 montrent le procédé qui est implémenté dans l'appareil de l'invention.

A la figure 2 qui est relative à la mise en place des données protégées, la référence K0 indique qu'un octet x déjà inscrit en mémoire est rendu disponible pour la suite de la mise en oeuvre du procédé. La case K1 représente les données qui vont être cryptées et la case K2 montre que les données cryptées par les fonctions f() et f'() sont mises dans la mémoire 56.

La figure 3 montre comment ces données cryptées sont utilisées. La case K10 indique le nombre d'octets x disponibles. Puis les données cryptées sont extraites de la mémoire 56, case K11, et avant d'être rendues disponibles à la case K12 elles subissent la transformation inverse f⁻¹ et f'⁻¹. Grâce à la présence du nombre x qui est affecté à chacun des dispositifs de combiné, un autre dispositif de combiné ne pourra pas utiliser les données de souscription.

La fonction f ou f' décrite peut être remplacée par tout autre fonction inversible sans sortir du cadre de l'invention. Par exemple un cryptage DES peut être aussi utilisé.

## Revendications

1. Appareil téléphonique comportant un dispositif de base muni d'un raccord pour une ligne téléphonique et d'un ensemble d'émission-réception pour communiquer avec au moins un dispositif de combiné, à partir duquel l'utilisateur peut engager une communication téléphonique, système comportant des moyens de souscription pour valider un dispositif de combiné avec la station de base au moyen de données de souscription, appareil caractérisé en ce qu'il comporte des moyens de cryptage pour crypter lesdites données de souscription.

2. Appareil téléphonique selon la revendication 1, caractérisé en ce qu'il comporte en outre des moyens de décryptage pour rendre disponibles les données de souscription cryptées.

3. Appareil téléphonique selon la revendication 1 ou 2, caractérisé en ce que les moyens de cryptage et/ou de décryptage impliquent un numéro d'identification du dispositif de combiné.

4. Appareil téléphonique selon l'une des revendications 1 à 3 fonctionnant selon les normes DECT, caractérisé en ce que les données sont notamment une ou plusieurs des données IPUI, UAK et RFPI définies par ladite norme.

5. Procédé mis en application dans l'appareil selon l'une des revendications 1 à 4, caractérisé en ce qu'il comporte une étape pour crypter, au préalable, les données de souscription et une étape de décrytage pour l'utilisation des données de souscription.

6. Dispositif de combiné convenant à un appareil selon l'une des revendications 1 à 3, caractérisé en ce qu'il comporte des moyens de décryptage.

7. Station de base convenant à un appareil selon l'une des revendications 1 à 4.
